Europäisches Patentamt

European Patent Office

Office européen des brevets

(11) Publication number: **0 373 757**
**A2**

## EUROPEAN PATENT APPLICATION

(21) Application number: **89311062.7**

(22) Date of filing: **26.10.89**

(51) Int. Cl.⁵: **H01B 7/34**

(30) Priority: **14.12.88 GB 8829169**

(43) Date of publication of application:
**20.06.90 Bulletin 90/25**

(84) Designated Contracting States:
**BE CH DE ES FR IT LI LU NL SE**

(71) Applicant: **VACTITE LIMITED**
**Linacre Lane Bootle**
**Merseyside, L20 6AE(GB)**

(72) Inventor: **Murphy, Richard John**
**26 Saker Street**
**Liverpool L4 0RA(GB)**

(74) Representative: **Maury, Richard Philip et al**
**The General Electric Company p.l.c. G.E.C.**
**Patent Department (Wembley Office) Hirst**
**Research Centre East Lane**
**Wembley Middlesex HA9 7PP(GB)**

(54) **Fire-resistant electrical insulator.**

(57) An electrically-insulative composition for coating an electrical conductor, comprising a plastics insulating material mixed with an inorganic ceramifiable powder capable of sintering such that the composition, upon pyrolysis of the plastics material in the event of fire, hardens to form an electrically-insulative, self-supporting coating.

EP 0 373 757 A2

## Fire-resistant Electrical Insulator

This invention relates to an electrically-insulative composition for coating an electrical conductor such as an electric wire or cable.

The purpose of the invention is to provide an insulator which provides flexibility during installation and service but which is fire-resistant and maintains its structural integrity and electrical insulation at high temperature. Examples of such a need are in the electrical wiring of fighting ships, certain essential circuits in buildings and in many applications of transportation.

The invention provides an electrically-insulative composition for coating an electrical conductor, comprising a plastics insulating material mixed with an inorganic ceramifiable powder capable of sintering such that the composition, upon pyrolysis of the plastics material in the event of fire, hardens to form an electrically-insulative, self-supporting coating.

The invention also provides insulated wire or cable comprising an electrical conductor coated with such a composition, by extrusion or otherwise.

Under normal conditions, the insulation performs as a flexible, plastics material so that the electric wire or cable is flexible. During a fire, however, the plastics material burns and the powder sinters to form a rigid structure capable of supporting its own weight, and capable of electrical insulation.

The ceramifiable insulation coating on an electric wire or cable is preferably the outermost coating but an outer protective coating may be used to improve the mechanical properties, or the thermal or chemical resistance properties, of the wire or cable.

In order to illustrate the invention, by way of example only, some inorganic filler systems for the organic insulation will now be described, such filler systems being capable of sintering to yield a material with substantial strength at temperatures of 300 to 400°C, where the organics pyrolyse, and which retain their strength, i.e. their structural integrity, at higher temperatures still.

It is known that the sintering of crystalline powders by solid state processes is relatively slow, and does not take place at all at temperatures below about three-fifths of the melting point expressed as an absolute temperature. Liquid phase sintering, on the other hand, involves the presence of a small proportion of liquid amongst the solid powder particles and can be a much more rapid process. In the examples described, therefore, a liquid phase is provided, mixed with a relatively inert oxide powder such as alumina or silica.

In order to provide a suitable bond over the entire temperature range of about 350° to 1000°C likely to be encountered in a fire, more than one glass component is required, each different component becoming less viscous over different temperature ranges. Preferably, at least one of the additional glass compositions crystallises to provide a glass-ceramic after it has flowed, thereby producing a stiffer structure.

Examples of such glasses are those based on lead borate and zinc borate. The particle size of the relatively inert powder, which may for example be silica or alumina based material, is of the order of 10 microns or smaller. The glass powders are of a comparable particle size, obtained by melting and milling.

The concentration of the glass powders in the mixture is of the order of 10% for each separate glass, i.e. a total of 20% where two glass powders are used.

Borosilicate or alumina silicate glass powders could be used in place of silica powder.

## Claims

1. An electrically-insulative composition for coating an electrical conductor, comprising a plastics insulating material characterised in that it is mixed with an inorganic ceramifiable powder capable of sintering such that the composition, upon pyrolysis of the plastics material in the event of fire, hardens to form an electrically-insulative, self-supporting coating.

2. An insulated wire or cable comprising an electrical conductor coated with a composition according to Claim 1.

3. A wire or cable according to Claim 2, in which the ceramifiable insulation coating is the outermost coating.

4. A wire or cable according to Claim 2, in which the ceramifiable insulation coating is covered with an outer protective coating.